# EUROPEAN PATENT APPLICATION

(11) **EP 3 654 068 A1**
(43) Date of publication of application: **20.05.2020**
(21) Application number: 19209019.9
(22) Date of filing: 14.11.2019
(51) Int. Cl.: G01V 1/34

(54) **METHOD OF PROCESSING AND DISPLAYING GEOPHYSICAL DATA, SOFTWARE FOR ITS REALIZATION AND DISPLAY OF GEOPHYSICAL DATA**

(30) Priority: 15.11.2018 SK 500662018
(71) Applicant: Ihring, Pavel, 900 21 Sväty Jur (SK)
(72) Inventor: Ihring, Pavel, 900 21 Sväty Jur (SK)
(74) Representative: Porubcan, Róbert

(57) **Abstract**

Within a coordinate system the convex areas of the database and/or concave areas of the database and/or linear areas of the database are determined, then the boundaries (1) between the convex areas of the database and/or concave areas of the database and/or linear areas of the database are defined. The determination of the areas and boundaries (1) is subsequently realized for two different sensitivities of the data processing in the database and subsequently in a single display (2) the results of the boundaries determination are displayed in such a way that the graphical elements which depict the boundaries (1) determined at various sensitivity of data processing are laid over each other and they are, at the same time, at least partially transparent in the upper layer. In a preferably method the lines of the values with the higher informative value are recognized in the database, subsequently the convex areas and/or the concave areas and/or the linear areas are determined on the lines with the higher informative value and individual areas are display on a line within lines on the upper layer of the display (2).

## Description

### Field of technology

The invention concerns a method of processing and preparation of interpretation of geophysical data, for example gravimetric, potential, depth or seismic data, which are measured and/or sensed for the system of points on the plane or in the space. The data are processed in such a way that the display of results of processing leads to intuitive evaluation of the physical essence which these data involve. The invention also discloses resulting display and software for data processing.

### Prior state of the art

The sensed or processed geophysical data are a system of discrete numeral values for individual points of the raster (grid) in the system of points in a coordinate system on the plane or in the space. Even though the size of raster scan (screening), the absolute sensed values, and relative changes of the values for the neighboring points, are significantly different pursuant to the type of geophysical data (seismics, Lidar, gravimetry, and so on), during the processing and preparation for the expert interpretation one meets identical issues. The information concerning the physical essence, determined by the features of the earth body, or contained - together with noise - in the broad database and their evaluation and interpretation is affected by the intuition if the expert.

Known mathematical methods of the differential geometry, for example Dupin indicatrix, which determine the normal curvature in the infinitely small area of the point, stumble upon the problem that there exist multiple functions which can be overlaid by the discrete values. The technical approach within the current evaluation of the sensed values leads to non-use of the part of the data or it incorrectly assesses the influence of noise in the data, since the known analyses of data presuppose a continuous course of the sensed data. In current period the geophysical data have a nature of discrete values of sensed physical values, for example gravitational acceleration, and subsequently the data are processed by means of interpolation, which however leads to slow processing and to results which actually do not reflect the physical essence.

Pursuant to the type of the geophysical data a various methods of their processing can be used, which at first glance appears as a natural consequence of the varying technical nature of the source of the geophysical data. A solution which would lead to quick processing and intuitive display of the geophysical data irrespective of their source is not known. The known methods of processing offer unstable solutions, the entry data contain mistakes whose influence in the results is hard to determine. The availability of the powerful measurement devices and tools leads to quicker acquisition of large amount of data and the problems with quality of their interpretation and speed of their processing arise.

Such processing of the geophysical data is thus desired and not known, which would be generally usable for multiple types of geophysical data and which would be characterized by high speed of processing without an omission of the data, and which would lead to intuitive display, so that the person skilled in the art would understand the results together with the actual geophysical essence of the sensed and measured environment.

### Essence of the invention

The abovementioned deficiencies in the prior state of the art are significantly remedied by the method of processing and display of the geophysical data which are sensed and/or measure by the respective technical means for the system of points in the coordinate system on the plane or in the space and subsequently these are inserted into the database, where the datum concerning the respective position of the point in the coordinate system is assigned to the sensed and/or measure geophysical value, and where the data from the database are processed and the results of the processing are displayed by means of the displaying element, according to this invention which essence lies in the fact that within the coordinate system the convex and/or concave areas of the database and/or linear areas of the database are determined and the boundary between the convex areas of the database and/or the concave areas of the database and/or the linear areas of the database is determined, whereby the determination of the areas and boundaries is realized subsequently for at least two different sensitivities of the data processing in the database and subsequently in one display the results of the determination of the boundaries are displayed in such a way that the graphical elements which depict the boundaries determined at varying sensitivity of the data processing are overlaid on each other and in the upper layer or in the upper layers they are at least partially transparent.

The steps leading to determination of boundaries have certain hierarchy, that is, certain sensitivity of processing, which corresponds to the set level of details. The chosen algorithm of finding boundaries allows to set various level of details. It is important that the method according to this invention includes gradual setting of the boundaries in the database for at least two different levels of details; usually it will be preferable to set the field boundaries for at least five different sensitivities of data processing. This results in at least two sets of boundaries, preferably five sets of boundaries, which disclose the state based on the data from a single database. With certain simplification it can be said that the sets of boundaries disclose the features of a single geophysical object, whereby the sets take into account varying sensitivity to the differences in the sensed values of a geophysical features. These are differences within the neighboring points of the coordinate system, as well as differences between non-neighboring points within the coordinate system with the set size. The use of different sensitivities of processing leads to suppression of noise, whereby this suppression is manifested in at least one set of boundaries.

At least three tiered (graduated) sensitivities of data processing are used so that the resulting display is easily perceivable by human senses and corresponds to the experience of the person skilled in the art; preferably at least five tiered sensitivities of the data processing are used, whereby the mutual pitch of the sensitivities of processing is at least 25% compared to the subsequent sensitivity. The value of the pitch that is 25% is suitable for the different phenomena to manifest in the observable way and also so that the resulting display is not impenetrable due to the large number of overlaid images. The sensitivity pitch between neighboring layered images can be the same for all chosen degrees of sensitivity or this pitch can be variable, for example with linearly ascending or descending value, for example as 25%, 50%, 75%. During the choice of change in sensitivity for individual layers of images a physical essence of the displayed phenomenon is taken into account, as well as the method of the gathering of the respective data in such a way that the number of the layers does not increase towards the impenetrable result, and also that the natural context contained in the data is sufficiently manifested. The sensitivity pitch between the layers can change at varying order - for example, exponentially, logarithmically, with fixed increment, and so on.

Subsequently, the boundaries between the convex, concave and linear areas of the database are displayed on the displaying element, whereby convexity or concavity or linearity in the point of the area is displayed by evaluation of the course of at least two curves. These curves represent the values sensed in the geophysical environment alongside two different lines, whereby these run through respective field of the area. The graphical elements which display the boundaries set at varying sensitivity of the data are overlaid on each other and at the same time at least partially transparent. This mainly means that the upper layer or multiple upper layers are at least partially transparent and they allow to see layers placed below the upper layer or multiple upper layers, respectively.

The degree of transparency of individual layers will be chosen pursuant to the number of layers in the respective display and it can be subject to change. A requirement shall eb met that all lines and planes are at least partially visible irrespective of a layer in which the display is. Subsequently these co-create an overall impression which the person skilled in the art can interpret more easily and more correctly.

The term "display" shall be understood broadly, denoting any graphical making available of the results which are adjusted to the perceivable by a human eye; mainly the display will be realized by electronic means such as screens, displays, physical printing on a suitable carrier, for example paper. During the display by electronic means, for example by means of a screen, such graphical programs will be used which are commonly capable of displaying multiple layers of images with a different degree of transparency of the upper layers at the same time. During the display one can thus use a software which is capable within a single display to depict multiple layers of the object; in this case the individual layers will depict the set of boundaries which will be determined at various settings of the sensitivity, that is, for various levels of details.

Convexity, concavity or linear area will be assessed for multiple points, preferably for all points of the coordinate system. The number of points of the coordinate system will be usually defined by the raster of measurement, that is, by the distance of the points in the coordinate system on the plane or in the space, for which the geophysical data are measured or sensed. The raster can be subsequently altered, for example by the interpolation of the values within a space between points with the actually measured or sensed geophysical data.

During the processing it is preferable to proceed in such a way that multiple differently oriented lines, for example, two mutually perpendicular lines with a cross-section in a respective point, are overlaid through the respective point in the coordinate system on the plane or in the space. The values sensed in the geophysical environment alongside the line form an assessed curve. The description of the overlaying of the lines through the respective point forms a mathematical tool which helps one to imagine the composition of the assessed curve; in reality this method from a technical point of view defines a choice of the determined sensed data from the database. Such values are chosen from the database in this step which have been sensed in the geophysical environment alongside the chosen line.

Since the sensed values are non-continuous, formed by discrete numerical data for the individual points in the coordinate system, it is preferable if a cover in a form of a strip involving the curve is produced for the curve and the determination of convex and concave areas of the curve is realized as assessment of a cover. During the assessment a polynome can be produced which substitutes the curve in such a way that both the curve and the polynome have basically the same cover. In the creation of the polynome the curve, originally from a discrete numerical data, is vectorized. The vectorization brings speeding up of the subsequent mathematical processes of the processing. The adjustment of the width of the strip of the cover determines the sensitivity of the assessment of the changes in the sensed data and the influence of noise. The vectorization of the discrete numerical values has a significant influence on the speeding up of the processing of the sensed data. During the vectorization it is possible to preferably set the degree of sensitivity by means of choice of the width of the strip in which the polynome crosses with the sensed discrete values. The polynome is subsequently assessed by analytical methods which significantly, multiply - multiplied even by tens - speeds up the processing, evaluation and display of the sensed data. The use of the polynome is preferable from the point of the speed of the processing of the data of even from the point of view of the precision and suppression of the noise.

The tiered setting of the width of the strip of the cover leads to subsequent creation of various levels of details at various levels of sensitivity of data processing. The sensitivity of the processing of the data from the database in case of such processing is set by the change of the width of the strip of the cover which subsequently affects the creation of the polynome.

The significant feature of the proposed invention is the gradual processing of the data into a single complex database from various levels of sensitivity and subsequent common display of the results in a single image. The advantage of the invention is the general usage for any type of data; the invention can be effectively used for the data gathered from the seismic measurements, from lidar, gravimetric measurements and so on. Thanks to the method according to this invention the data are processed extremely fast - in order of hours - as compared to the known methods which take weeks. The important advantage is the fidelity of the displayed geophysical features, the display of various levels of processing of the data which leads to the intuitive display which the person skilled in the art can interpret correctly. This is the main requirement during the assessment of the data - that the display helps the human perception of the geophysical features and that the clues for the subsequent expert assessment of the state are naturally produced.

The database of the sensed and/or measured geophysical data contains large amount of discrete values; the processing according to this technical solution reveals mutual connections between the course of the discrete values and subsequently prepares significant changes for the display, whereby the changes delimit the geophysical phenomena in the measured or sensed environment. Such method allows to see and determined the manifestations of the geophysical nature with varying importance, intensity or size, whereby during the display the influence of the phenomena with different importance, intensity or size is not suppressed. That means that, for example, during the display of geophysical phenomena with larger absolute intensity there occurs no neglect of the of the respective phenomenon with a smaller intensity, but this phenomenon is made in some of the displayed layers more visible and thereby an optical idea for the more complex assessment of the actual geophysical essence is formed. If the boundaries of the areas for variously set sensitivities match at a part of their boundary line, a strengthening of the optical meaning of such boundary takes place during the display according to this invention and the person skilled in the art recognizes the structural break within a respective geophysical value more easily. The strengthening of the optical perception in the resulting composition of the multiple displayed layers naturally leads a person skilled int the art to the correct interpretation, which is an important result of this invention. The phenomena which are unimportant or which are a result of the noise in the sensed values do not disappear during the display but they are manifested only within a single sensitivity of the data processing and thus they are subsequently less significant within an overall image. A physical or geophysical essence, respectively, of the sensed data is manifested in the display since these are not random data but they have mutual connections by means of a physical value which has been the subject of sensing. For example, the fluctuation of the gravitational acceleration has links to a structure of the earth core and pursuant to the signalized density of the rocks and minerals one can determine their type and composition. The fluctuation of the sensed values is manifested in the database by large amount of discrete values; during a simple observation, that is during the reading of the absolute values, or during the simple display by means of a color fields for various values, the overall impression comparable to the display according to this invention is not gained. It has been shown during the comparation of the results according to this invention with the subsequent field tests that this invention brings very veracious, reliable and correct display of the actual geophysical phenomena.

In cases of some types of sensing or measurement the values of the geophysical data in points alongside certain lines have a higher precision and/or denser raster, or otherwise higher informative value. This is related to the technical character of the measurement of the respective type of the geophysical data. The typical cases are so called "flightlines" during the measurement of low-flying aircraft, where the "flightlines" are created by measurement directed perpendicularly downwards, that is, from the aircraft vertically towards the surface. For example, a gravimeter is placed in the aircraft, which within a strip several-hundred-meter-wide measures and records the absolute value of the gravitational acceleration for individual points of the strip. The values measured for the edges of the strip are less precise; the values measured right below the aircraft are more precise and even without interpolation they include the densest data with a minimal noise. In this type of geophysical data one can simply determine in the database which data correspond to the coordinate system in the "flightlines" position, or which of these groups of data are indexed already during their placement to the database. Such "flightlines" values represent the lines of the data with a higher informative value. For an identification of the values with a higher informative value in the database one can use positionally descriptive data concerning the flight course, for example GPS coordinates from the aircraft recorder. Since, in a database, a datum concerning the respective position of a point in a coordinate system is assigned to each sensed and/or measured geophysical value, one can later determine by means of coupling of the values from the aircraft recorder which sensed and/or measured values have a higher precision and/or more dense raster.

It is preferable if the lines of these values with a higher informative value are processed in an independent step in a similar way as data from the planes or from the space in a coordinate system pursuant to the abovementioned description, that is, within the lines with a higher informative values the convex and/or concave and/or linear areas of the line are determined. In this step the individual areas are displayed on a line and such line is placed on the upper layer of the display. The display of the areas on the line has such form that one area is a line with the respective color on the line. The line is formed by sequentially following lines of various colors, for example three various colors, where the length of the lines corresponds to the size or length, respectively, of respective areas. The line is placed in a position which corresponds to the display of the lines with a higher informative value in a given coordinate system. The display of these lines with a higher informative value on the upper layer of the display brings during the display a necessary dominance which during the interpretation suggests to the person skilled in the art that the analyzed geophysical state is manifested in a line with more exact measurement. It is preferable if the values in the lines with a higher informative value are processed with a higher sensitivity of processing than the processed values in other parts of the coordinate system.

The advantage of the processing of the lines with a higher informative value according to this invention is that they are processed by the same method as the values from the surrounding points of the planes or space of the coordinate system, whereby during the display an increased optical presentation on the upper layer of the display is offered to them. The person skilled in the art which sees the connection with the lines with a higher informative value is capable of obtaining the more plastic and more complex view of the manifestations of the analyzed geophysical state. The display of the lines with a higher informative value together with other at least two layers offers a more complex view and an expert on the given geophysical phenomenon can interpret the situation captured in a complex database more simply and more correctly.

A software for the realization of the abovementioned method is subject of this invention, too. The software pursuant to this invention gradually realizes the steps - determination of the areas of the database and determination of the boundaries of the areas for a single sensitivity of the data processing, the subsequent display of two or more sets of the boundaries for different sensitivities of the data processing where the layers of display are overlaid on each other and they are at least partially transparent. In case the database includes the values in lines with a higher informative values the software produces a step in which the values with a higher informative value are processed with a sensitivity surpassing the sensitivity of the processing of the values from the surrounding parts of the database and subsequently the values of the areas alongside the line with a higher informative values are displayed on the upper layer of the display.

The display of the geophysical data itself, by means of a display element, mainly electronic display element, where the display includes a graphical display of the sensed and/or measured geophysical data from the database in the coordinate system on the plane or in the space, according to this invention, is also subject of the invention, whereby its essence lies in the fact that the display has at least two layers which represent boundaries between convex areas of the database and/or concave areas of the database and/or linear areas of the database, where the boundaries of the areas in different layers correspond to the processing of the values from a database for a various sensitivity of the processing, whereby the areas are overlaid on each other and they are at least partially transparent.

The advantages of this invention are high speed of processing even in cases of complex and large databases, the universal applicability to all sorts of geophysical data, and intuitive display which provides the expert very transparently with an information concerning the course of the assessed geophysical phenomenon. The advantage is also the cooperative visualizing of flightlines as lines with a higher informative value which are display on the background of the basic data.

### Description of drawings

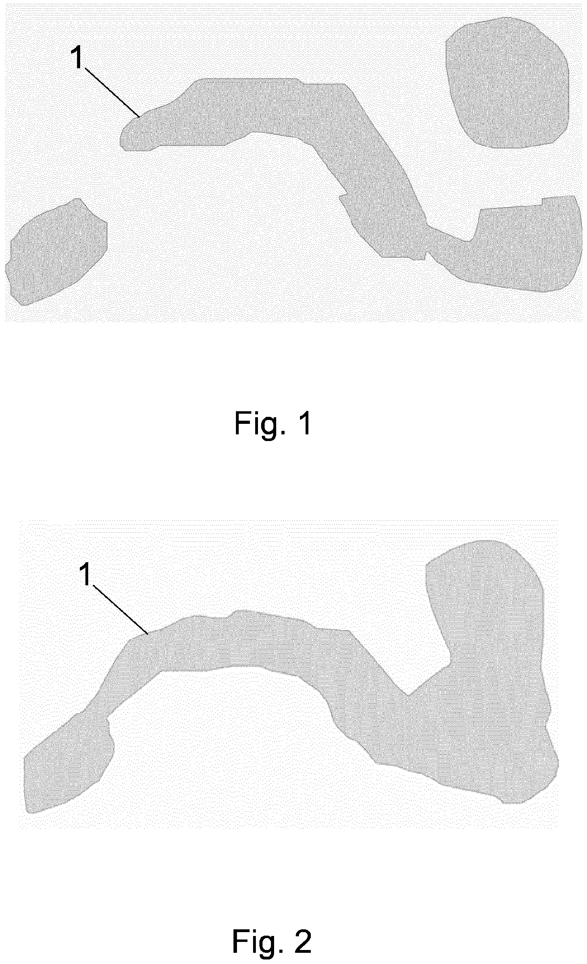

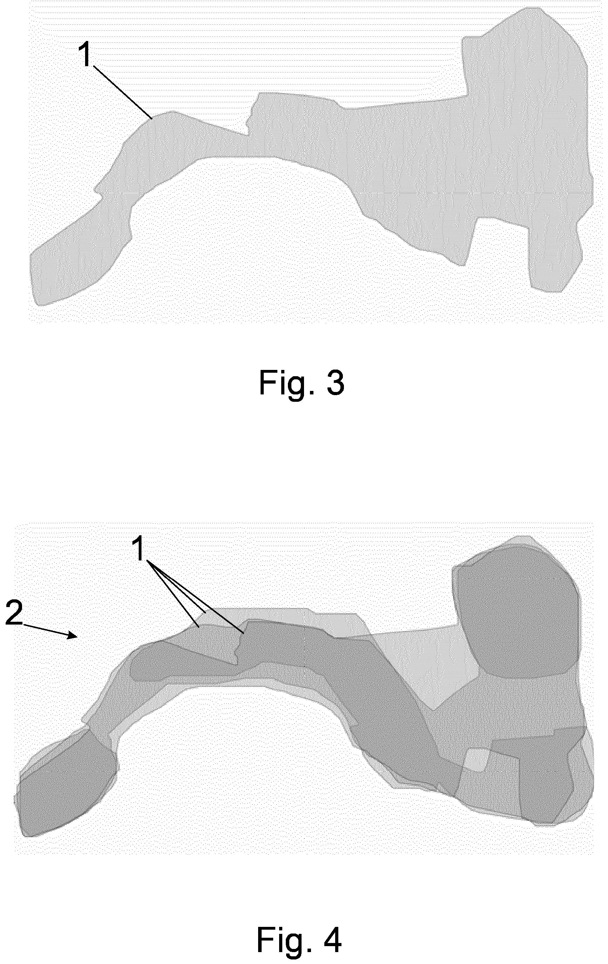

The invention is further disclosed by means of figures 1 to 12. The depicted particular geophysical states and data are illustrative only; the scope of protection is not defined by the data content or particular depiction, and these data and displays cannot be interpreted as limiting the scope of protection.
Figures 1 to 3 gradually depict the boundaries of areas for three varying levels of sensitivity of geophysical data processing. Figure 4 is resulting display with the partially transparent layers with three various levels of processing of the geophysical data.
Figure 5 depicts layers of processing for five various sensitivity levels, that is, for five various levels of detail. The arrow shows the decrease in sensitivity from level 1 to level 5.
Figure 6 depicts the surface of the country above which the values of the gravitational acceleration has been aerially measured in order to assess the subterranean structures of the minerals. Figure 6 is an absolute display of the measured data by means of a color differentiation. Figure 7 depicts local convex and local concave areas. Figure 8 discloses a display of the results of processing of the lines with a higher informative value; these results are subsequently, on figure 9, overlaid on the foreground display layer on figure 7.
Figures 10 to 12 depict the evaluation of a single line, that is, determination of the convex areas for three various levels of sensitivity. Figure 10 is depiction at highest level of details; figure 12 is depiction at lowest level of details.

### Examples of realization

### Example 1

In this example according to figures 1 to 4 the three various levels of sensitivity of processing of geophysical data are used. Figures 1 to 3 depict boundaries 1 of the areas for individual levels of sensitivity of processing in independent layers. Subsequently these layers are overlaid through each other in such a way that their mutual position pursuant to the coordinate system is maintained. After the overlaying of the layers the boundaries 1 of the areas from individual layers remain visible. Where the boundaries 1 intersect, these produce a more emphatic optical impression.

### Example 2

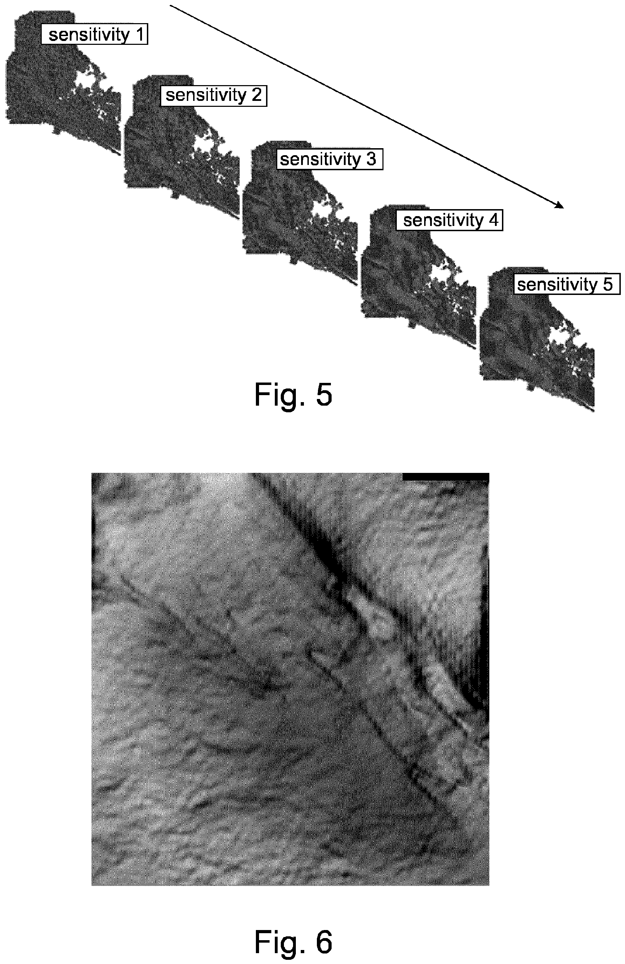

In this example according to figure 5 the geophysical data sensed form the aircraft has been processed at five levels of sensitivity, that is, at five levels of details. In the upper left part, the map depicts the amount of detail features. Gradually, heading right, the influence of larger structures in the display 2 rises and the map on the right depicts main regional trends or tendencies.

### Example 3

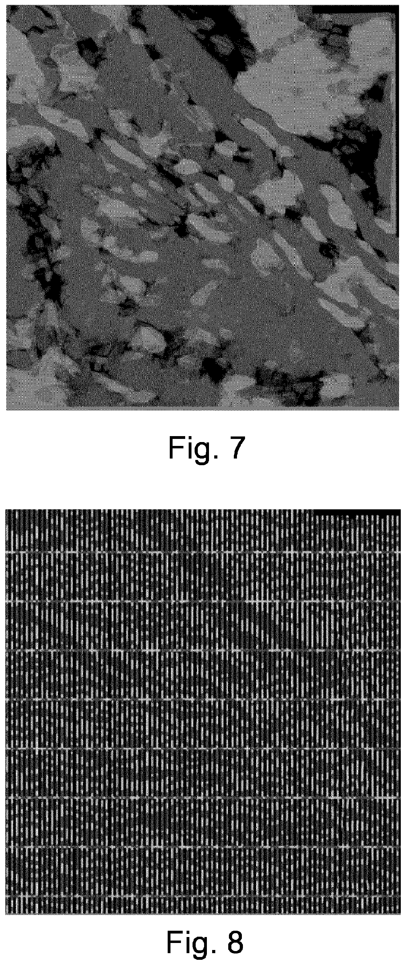

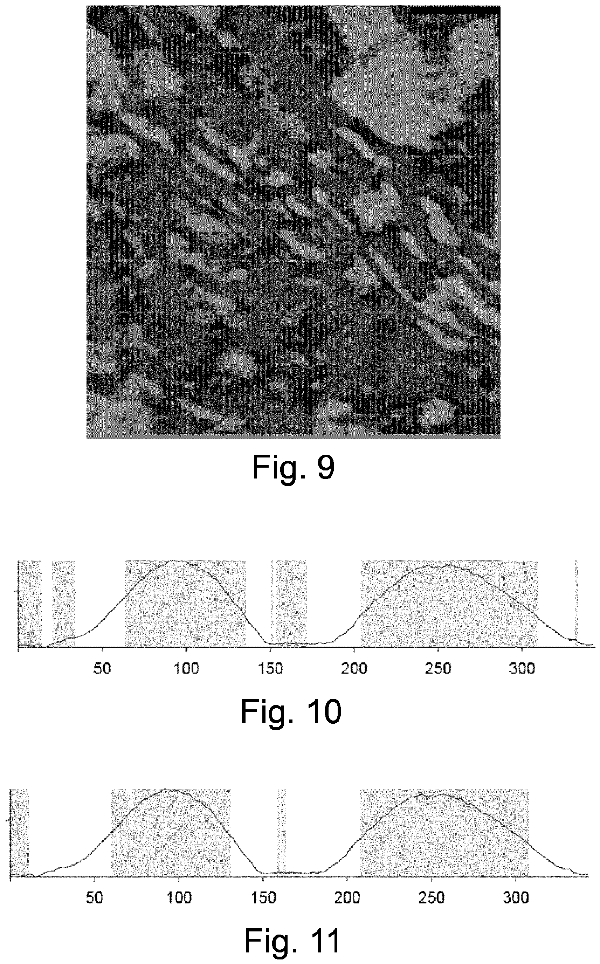

During the aerial sensing the data concerning the position of the aircraft are recorded; the aircraft flies in parallel strips above the terrain. The measurements which are realized perpendicularly above the terrain, that is, above the projection of the aircraft, have a higher informative value without the interpolation, and they are also called flightlines. In the database these values are identifiable pursuant to the positionally descriptive flight data. The values for the lines with a higher informative value are processed with a higher level of sensitivity pursuant to the figure 8 and this graphical output is placed on the upper layer of display 2 in form of the set of the lines on the figure 9.

### Example 4

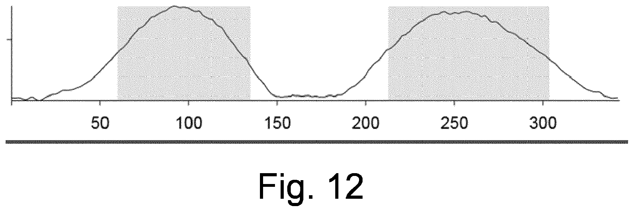

Identification of the convex areas on a single curve at three levels of detail is explained on figures 10 to 12. Figure 10 depicts the processing at lowest level of detail; figure 12 depicts the processing at highest level of detail. The result is that more of the convex areas are depicted on the figure 10 than on the figure 12.

### Industrial applicability

The industrial applicability of the invention is obvious. According to this invention it is possible to industrially and repeatedly process the databases with the geophysical data and display the results of the processing in a way which leads the person skilled in the art intuitively towards interpretation. The invention is applicable to the geophysical data but it can be used for other data, too, for example in field of medicine, field of technical measurements and so on, where the data do not have stochastic fluctuation, but where the changes of the values are manifestations of physical features of the assessed structure.

### List of symbols

1 - boundary
2 - display

## Claims

1. A method of processing and display of geophysical data which are sensed and/or measured for a system of points in a coordinate system on a plane or in a space by respective technical means and subsequently stored in a database of the sensed and/or measured values, where a datum concerning a respective position in the coordinate system is assigned to the sensed and/or measure geophysical value in the database, and where the data from the database are processed, and where results of processing are displayed by means of a display element, **characterized by the fact**, that
within the coordinate system convex areas of the database and/or concave areas of the database and/or linear areas of the database are determined
and a boundary (1) between the convex areas of the database and/or the concave areas of the database and/or the linear areas of the database is determined,
whereby the determination of the areas and the determination of the boundaries (1) is gradually realized for at least two different levels of sensitivity of processing of the sensed and/or measured data in the database
and subsequently the results of the determination of the boundaries are displayed within a single display (2) in such a way that graphical elements which depict the boundaries (1) determined at various sensitivity of the data processing are laid over each other and they are at a same time at least partially transparent.

2. The method of the processing and display of the geophysical data according to the claim 1 **characterized by the fact**, that the convexity or the concavity or the linearity in the point of the area is determined by an assessment of a course of at least two curves which represent the values physically sensed in a geophysical environment alongside two different lines which run through the respective point in the area.

3. The method of the processing and display of the geophysical data according to the claim 1 or 2 **characterized by the fact**, that the results of the determination of the boundaries (1) are display by means of an electronic mean, preferably through a display.

4. The method of the processing and display of the geophysical data according to the claim 1 or 2 **characterized by the fact**, that the results of the determination of the boundaries (1) are displayed by means of printing on a physical carrier.

5. The method of the processing and display of the geophysical data according to any of the claims 2 to 4 **characterized by the fact**, that the curves are vectorized.

6. The method of the processing and display of the geophysical data according to the claim 5 **characterized by the fact**, that the curve for further processing is substituted by a polynome which has a similar cover as the curve at the respective level of sensitivity of the data processing.

7. The method of the processing and display of the geophysical data according to the claim 6 **characterized by the fact**, that the level of sensitivity is set by a change of a width of a strip in which the polynome overlaps with the sensed and/or measured geophysical values.

8. The method of the processing and display of the geophysical data according to any of the claims 1 to 7 **characterized by the fact**, that lines of value with a higher informative value are recognized in the database, preferably they are recognized by means of position data in the respective coordinate system, subsequently the convex areas and/or the concave areas and/or the linear areas are determined on the lines with the higher informative value, and the individual areas are displayed on the line with the higher informative value on an upper layer of the display (2).

9. The method of the processing and display of the geophysical data according to the claim 8 **characterized by the fact**, that the values in the line with the higher informative value are processed with the higher sensitivity of the processing than the values in the other parts of the coordinate system.

10. The method of the processing and display of the geophysical data according to the claim 8 to 9 **characterized by the fact**, that the values in the lines with the higher informative value are "flightlines" measured during flying when the measurement is directed perpendicularly downwards.

11. The method of the processing and display of the geophysical data according to any of the claims 1 to 10 **characterized by the fact**, that at least three, preferably five, tiered sensitivities of the data processing are used, whereby the sensitivities of the data processing have a mutual pitch at least 25% from the subsequent sensitivity.

12. A software for the processing and display of the geophysical data from the database in which the datum concerning the particular position of the point in the coordinate system is assigned to the sensed and/or measured geophysical value, according to any of the claims 1 to 11 **characterized by the fact**, that it is programmed to perform following steps: determination of the areas in the database of the sensed and/or measured geophysical values and the determination of the boundaries (1) of the areas for a single sensitivity of the data processing; a repeated determination of the areas of the database and the determination of the boundaries (1) of the areas for at least one different sensitivity of the data processing; the display of both or multiple sets of the boundaries for the different sensitivities of the data processing where the layers of the display are laid over each other and they are at least partially transparent.

13. The software for the processing and display of the geophysical data according to the claim 12 **characterized by the fact**, that it is programmed to realize a step in which the values with the higher informative value are processed with the sensitivity surpassing the sensitivity of the processing of the values from the surrounding parts of the database and subsequently the boundaries (1) of the areas alongside the line with the higher informative value is depicted on the upper layer of the display (2).

14. A display of geophysical data in a database in which a datum concerning a respective position of a point in a coordinate system is assigned to a sensed and/or measured geophysical value, **characterized by the fact**, that it includes are least two layers representing boundaries (1) between convex areas of the database and/or concave areas of the database and/or linear areas of the database, where the boundaries (1) of the areas in different layers correspond to processing of the values in the database for various sensitivity of the processing, whereby the layers are laid over each and they are, at a same time, at least partially transparent.

15. The display of the geophysical data from the database according to the claim 14 **characterized by the fact**, that it has an upper layer in which the boundaries (1) for the values with a higher informative value are depicted, whereby these boundaries (1) are a result of the processing with the sensitivity surpassing the sensitivity of the processing of the values from the surrounding parts of the database.
